# EUROPÄISCHE PATENTSCHRIFT

(11) **EP 0 564 887 B1**
(45) Veröffentlichungstag und Bekanntmachung des Hinweises auf die Patenterteilung: **07.06.1995**
(21) Anmeldenummer: 93104700.5
(22) Anmeldetag: 22.03.1993
(51) Int. Cl.: B65D 71/70, B65D 85/42

(54) **Stapelbare Trägerplatte für KFZ-Lampen**
Stackable tray for motor vehicle lamp bulbs
Plateau gerbable pour ampoules électriques pour véhicules

(30) Priorität: 06.04.1992 DE 9204751 U
(43) Veröffentlichungstag der Anmeldung: 13.10.1993
(73) Patentinhaber: Patent-Treuhand-Gesellschaft für elektrische Glühlampen mbH, 81543 München (DE)
(72) Erfinder: Fiebig, Werner, W-8000 München (DE)

(56) Entgegenhaltungen:
- FR-A- 1 514 212
- GB-A- 2 158 413
- US-A- 3 771 646

## Beschreibung

Die Erfindung betrifft eine stapelbare Palette zum Einsetzen in einen quaderförmigen Transportbehälter gemäß dem Oberbegriff des Schutzanspruchs 1.

Eine derartige Palette ist beispielsweise aus dem DE-GM 78 32 926 bekannt.
Der hier offenbarte Transportbehälter besteht aus einem quaderförmigen Behälter mit einer Grund- und einer Oberplatte, zwischen denen mehrere Paletten übereinander in den Behälter eingesetzt sind. Die Paletten besitzen eine Vielzahl von rechteckigen Öffnungen, in die vorzugsweise Kfz-Lampen mit ihrer Zentrierscheibe eingehängt werden. Ferner weisen die Paletten auch ebenso viele kreisrunde Öffnungen auf, die so angeordnet sind, daß die Glaskolben der in einer Palette eingehängten Lampen in die runden Öffnungen der nächst unteren Palette hineinragen.

Ein gravierender Nachteil dieser Paletten und des Transportbehälters besteht darin, daß es sich hierbei um eine Einwegverpackung aus Pappe handelt, die nur zum einmaligen Gebrauch gedacht ist. Damit entspricht dieser Transportbehälter mit seinen eingesetzten Paletten nicht dem deutschen Gesetz zur Verpackungsvermeidung.

Es ist die Aufgabe der Erfindung, eine stapelbare Palette zum Transport einer Vielzahl von mit einer Zentrierscheibe versehenen elektrischen Lampen bereitzustellen, die mehrwegfähig ist, als Einsatz für einen quaderförmigen Transportbehälter geeignet ist und eine möglichst kompakte, raumsparende Anordnung dieser Lampen innerhalb des Transportbehälters erlaubt.

Diese Aufgabe wird erfindungsgemäß durch die kennzeichnenden Merkmale des Schutzanspruchs 1 gelöst. Besonders vorteilhafte Ausführungsformen der Erfindung sind in den Unteransprüchen beschrieben.

Die erfindungsgemäße Palette besteht vorteilhaft aus einem robusten Kunststoff, so daß sie als Mehrweg-Behältnis für mit einer Zentrierscheibe versehene elektrische Lampen, insbesondere für Kfz-Lampen, verwendet werden kann.

Mehrere Paletten sind im Transportbehälter übereinander gestapelt und auf ihrer Oberseite mit einer Vielzahl von nebeneinander in einer horizontalen Ebene angeordneten Aufnahmevorrichtungen ausgestattet, in die die zu transportierenden Lampen eingehängt sind. Jede Aufnahmevorrichtung besitzt eine Auflagefläche für die Zentrierscheibe der zu transportierenden Lampen, die vorteilhaft um einen spitzen Winkel gegenüber der Horizontalen geneigt ist. Dadurch erhalten die Lampen in den Paletten eine Schräglage, die es ermöglicht, die Stapelhöhe der Paletten zu verringern, und damit in einem Transportbehälter mit vorgegebenen Abmessungen die Anzahl der einsetzbaren Paletten zu erhöhen.

Vorteilhafterweise sind die Aufnahmevorrichtungen mit zusätzlichen Stützelementen ausgestattet und die Kontur der Auflageflächen ist den Abmessungen der aufliegenden Zentrierscheiben angepaßt, so daß die Lampen in ihrer Lage auf der Palette eindeutig fixiert sind. Damit wird eine wichtige Voraussetzung zur automatisierten Bestückung der Paletten geschaffen. Außerdem sind neben jeder Auflagefläche zwei einander gegenüberliegende Vertiefungen in der Oberfläche der Palette angebracht, die es den Greifzangen eines Bestückungsroboters ermöglichen, die Lampen an ihrer Zentrierscheibe zu ergreifen.
Unsymmetrisch ausgeführte Handeingriffe an den Stirnseiten der Paletten und unsymmetrische Stapelzargen auf ihrer Oberseite verhindern, daß die Palletten mit falscher Orientierung in den Transportbehälter eingesetzt werden. Ein weiterer Vorteil des erfindungsgemäßen Transportbehälters besteht darin, daß die Paletten mit Ablauföffnungen für eine Reinigungsflüssigkeit versehen sind, die eine Naßreinigung der in den Paletten angeordneten Lampen ermöglichen.

Die Erfindung wird nachstehend anhand eines besonders bevorzugten Ausführungsbeispiels näher erläutert.
Es zeigen:
- Figur 1: eine Draufsicht (ausschnittsweise) auf die Oberseite einer Palette des erfindungsgemäßen Transportbehälters
- Figur 2: eine Längsseitenansicht (ausschnittsweise) der Palette aus Figur 1, teilweise geschnitten, mit einer H1-Lampe
- Figur 3: eine Draufsicht auf eine Aufnahmevorrichtung der Palette aus Figur 1
- Figur 4: eine Seitenansicht einer H1-Lampe.

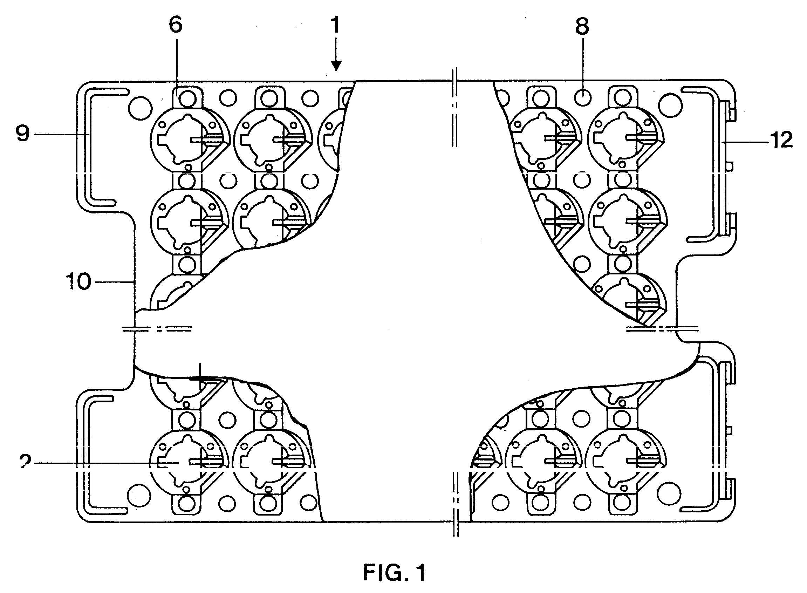

Die Figur 1 zeigt ausschnittsweise eine Draufsicht auf die Oberseite einer erfindungsgemäßen Palette 1 für H1-Kfz-Lampen. Bei der Palette 1 handelt es sich um ein Spritzgußteil aus Kunststoff. Mehrere solcher Paletten 1 können übereinander gestapelt und in einem quaderförmigen Transportbehälter (nicht abgebildet), der üblicherweise ebenfalls aus Kunststoff besteht, eingesetzt werden. Dabei ist der Abstand einander äquivalenter Teile zweier unmittelbar übereinander gestapelter Paletten kleiner als die Länge einer H1-Lampe.

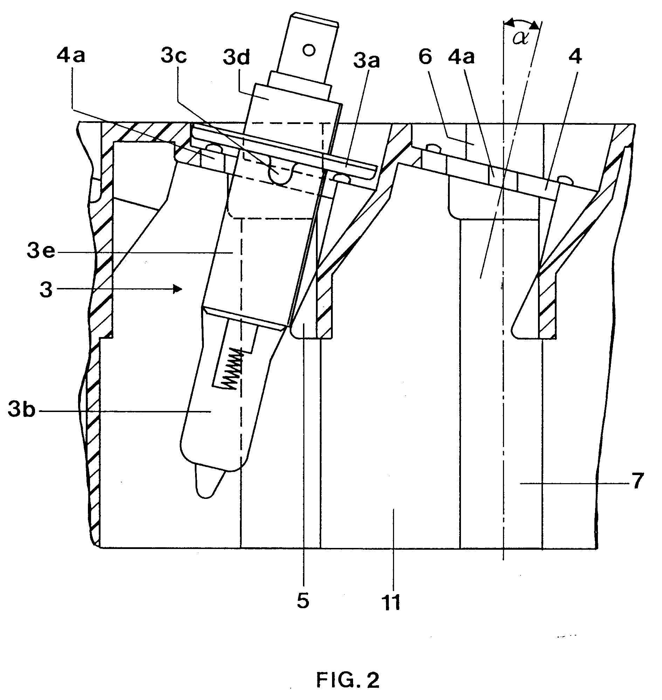

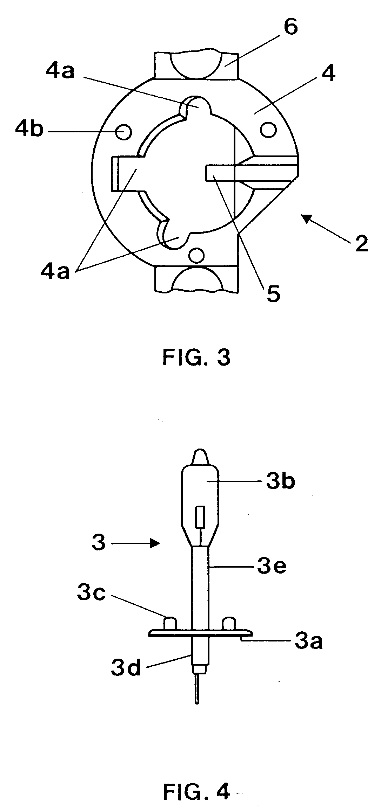

Jede Palette 1 ist mit achtzig in einer horizontalen Ebene in Reihen und Spalten angeordnete Aufnahmevorrichtungen 2 für H1-Kfz-Lampen 3 (Figur 4) ausgestattet. Die Aufnahmevorrichtungen 2 (Figur 2) besitzen jeweils eine Auflagefläche 4 mit mehreren Auflagenoppen 4b. Die Auflageflächen 4 sind in die Oberseite der Kunststoffpalette 1 eingelassen und bilden mit der Horizontalen einen Neigungswinkel α von ungefähr 13°. Dabei sind die Kontur und die Abmessungen der Auflageflächen 4 auf die Form und die Maße der Zentrierscheibe 3a der H1-Lampen 3 abgestimmt.

Die H1-Lampen 3 hängen mit ihrem Glaskolben 3b nach unten in den Aufnahmevorrichtungen 2, wobei die Zentrierscheibe 3a auf den Auflagenoppen 4b der Auflagefläche 4 aufliegt. Für die Nieten 3c auf der Zentrierscheibe 3a sind Aussparungen 4a in der Auflagefläche 4 vorgesehen. Der Neigungswinkel α ist derart gewählt, daß die Lampenkolben 3b der in einer oberen Palette 1 eingesetzten H1-Lampen 3 in den Zwischenraum zwischen die Sockelenden 3d der auf der nächst unteren Palette angeordneten H1-Lampen hineinragt.

Jede Aufnahmevorrichtung 2 weist ein zusätzliches Stützelement 5 auf, das die eingesetzten H1-Lampen 3 an ihrer Sockelhülse 3e seitlich abstützt.
Außerdem sind seitlich neben jeder Aufnahmevorrichtung 2 zwei einander gegenüberliegende rechteckige Vertiefungen 6 in der Oberfläche der Palette 1 angebracht. In diese Vertiefungen 6 können die Greifzangen eines Bestückungsroboters greifen und unter die Zentrierscheibe 3a der H1-Lampen 3 fassen, um diese aus den Aufnahmevorrichtungen 2 zu entfernen bzw. in diese einzusetzen.

Die Kunststoffpalette 1 weist auf ihrer Unterseite eine Vielzahl von angeformten rohrförmigen Niederhaltern 7 auf, die ein Herausfallen der H1-Lampen 3 aus ihrer Aufnahmevorrichtung 2 verhindern. Diese Niederhalter 7 sind unterhalb der Vertiefungen 6 plaziert. Im aufeinandergestapelten Zustand befinden sich die Niederhalter 7 einer oberen Palette unmittelbar über den Zentrierscheiben 3a der auf der nächst unteren Palette eingesetzten H1-Lampen 3. Die rohrförmigen Niederhalter 7 dienen auch, zusammen mit weiteren Ablauföffnungen 8, als Ablaufvorrichtung für eine Reinigungsflüssigkeit, so daß eine Naßreinigung der H1-Lampen 3 auf den Paletten 1 möglich ist.

Die Kunststoffpalette 1 besitzt einen im wesentlichen rechteckigen Querschnitt mit einer Länge von ca. 32 cm und einer Breite von ca. 24,1 cm. Auf der Oberseite ist die Palette 1 an ihren Ecken mit Stapelzargen 9 ausgestattet. Um die Paletten 1 untereinander gegen ein um 180° verdrehtes Einsetzen in den Transportbehälter zu sichern, wurden die Stapelzargen 9 unsymmetrisch ausgeführt. An ihren Stirnseiten weist die Palette 1 zwei unterschiedlich breite Handeingriffe 10 auf.

Außerdem besitzen die Paletten 1 auf ihrer Unterseite angeformte Seitenwände 11, die sich über die Längsseiten und unterhalb der Stapelzargen 9 auch über die Stirnseiten der Palette 1 erstrecken. Die Höhe dieser Seitenwände 11 beträgt ungefähr 5,5 cm.
Ferner sind die Kunststoffpaletten 1 an einer ihrer Stirnseiten noch mit Steckvorrichtungen 12 zum Einstecken von Etiketten versehen.

Die Erfindung beschränkt sich nicht auf das angegebene Ausführungsbeispiel. Insbesondere können die Kunststoffpaletten des erfindungsgemäßen Transportbehälters mit geringem Aufwand auch an beliebige andere, mit einer Zentrierscheibe versehene elektrische Lampen angepaßt werden, beispielsweise auch an andere Kfz-Lampen wie z.B. H4- und H7-Lampen.
Es müßten lediglich die Abmessungen der Aufnahmevorrichtungen angepaßt und der Neigungswinkel α , der im wesentlichen von der Länge der Lampen, dem Durchmesser der Zentrierscheibe und der Höhe der Palette abhängt, optimiert werden.

## Patentansprüche

1. Palette zum stapelweisen Einsetzen in einen quaderförmigen Transportbehälter, wobei die Palette (1) auf ihrer Oberseite mehrere in einer horizontalen Paletten-Ebene angeordnete Aufnahmevorrichtungen (2) für jeweils eine mit einer Zentrierscheibe (3a), einem Glaskolben (3b) und einem Sockel (3d,e) versehene elektrische Lampe (3) besitzt, und wobei jede Aufnahmevorrichtung (2) eine Auflagefläche (4) für die Zentrierscheibe (3a) der Lampe (3) aufweist, dadurch gekennzeichnet, daß
- die Palette (1) aus Kunststoff besteht,
- der Abstand einander entsprechender Teile zweier unmittelbar übereinander gestapelter Paletten (1) kleiner als die Länge der Lampen (3) ist,
- die Auflageflächen (4) einen spitzen Neigungswinkel ( α ) mit der horizontalen Palettenebene bilden, wobei der Neigungswinkel ( α ) derart gewählt ist, daß die in einer ersten oberen Palette (1) hängenden Lampen (3) mit ihren nach unten weisenden Glaskolben (3b) in den Zwischenraum der nach oben weisenden Sockelenden (3d) der in einer zweiten, nächst unteren Palette (1) hängenden Lampen (3) hineinragen können.

2. Palette nach Anspruch 1, dadurch gekennzeichnet, daß am äußeren Seitenrand einer jeder Auflagefläche (4) zwei einander gegenüberliegende Vertiefungen (6) zum seitlichen Erfassen und Untergreifen der Zentrierscheibe (3a) in der Oberseite der Palette (1) angebracht sind.

3. Palette nach Anspruch 1, dadurch gekennzeichnet, daß jede Aufnahmevorrichtung (2) mit einem Stützelement (5) ausgestattet ist, das die Lampe (3) an ihrer Sockelhülse (3e) seitlich abstützt.

4. Palette nach Anspruch 1, dadurch gekennzeichnet, daß die Kontur und die Abmessungen der Auflagefläche (4) der Kontur und den Abmessungen der Zentrierscheibe (3a) angepaßt sind.

5. Palette nach Anspruch 1, dadurch gekennzeichnet, daß die Palette (1) auf ihrer Unterseite mit einer Vielzahl von angeformten rohrförmigen Niederhaltern (7) versehen ist, wobei diese Niederhalter (7) derart bemessen und positioniert sind, daß die Niederhalter (7) einer ersten, oberen Palette (1) in einem Palettenstapel über den Auflageflächen (4) einer zweiten, nächst unteren Palette (1) angeordnet sind.

6. Palette nach Anspruch 1 , dadurch gekennzeichnet, daß die Palette (1) im wesentlichen einen rechteckigen Querschnitt besitzt und an ihren Stirnseiten mit unterschiedlich breiten Handeingriffen (10) ausgestattet ist.

7. Palette nach Anspruch 1, dadurch gekennzeichnet, daß die Palette (1) auf ihrer Oberseite mit unsymmetrisch ausgeführten Stapelzargen (9) versehen ist.

8. Palette nach Anspruch 1 , dadurch gekennzeichnet, daß die Palette (1) mit Ablauföffnungen (8) ausgestattet ist.

## Claims

1. Pallet for stacking-type insertion into a cuboid transportation container, the pallet (1) possessing on its upper side a plurality of receptors (2), disposed in a horizontal pallet plane, for in each case one electric lamp (3) provided with a centring disc (3a), a glass bulb (3b) and a base (3d, e), and each receptor (2) exhibiting a bearing surface (4) for the centring disc (3a) of the lamp (3), characterized in that
- the pallet (1) consists of plastics material,
- the distance between mutually corresponding parts of two pallets (1) stacked directly one on top of the other is less than the length of the lamps (3),
- the bearing surfaces (4) form an acute angle of inclination (α) with the horizontal pallet plane, the angle of inclination (α) being selected such that the lamps (3) hanging in a first upper pallet (1) are able to jut with their downwardly pointing glass bulbs (3b) into the interspace of the upwardly pointing base ends (3d) of the lamps (3) hanging in a second, next lower pallet (1).

2. Pallet according to Claim 1, characterized in that on the outer lateral edge of each individual bearing surface (4) there are formed two mutually opposing depressions (6) for the lateral grasping and undergripping of the centring disc (3a) in the upper side of the pallet (1).

3. Pallet according to Claim 1, characterized in that each receptor (2) is equipped with a supporting element (5), which supports the lamp (3) laterally on its base sleeve (3e).

4. Pallet according to Claim 1, characterized in that the contour and dimensions of the bearing surface (4) are matched to the contour and dimensions of the centring disc (3a).

5. Pallet according to Claim 1, characterized in that the pallet (1) is provided on its underside with a large number of formed-on, tubular hold-down devices (7), these hold-down devices (7) being dimensioned and positioned such that the hold-down devices (7) of a first, upper pallet (1) are disposed, in a stack of pallets, above the bearing surfaces (4) of a second, next lower pallet (1).

6. Pallet according to Claim 1, characterized in that the pallet (1) essentially possesses a rectangular cross-section and is equipped on its end faces with handling recesses (10) of varying widths.

7. Pallet according to Claim 1, characterized in that the pallet (1) is provided on its upper side with non-symmetrically constructed stacking tubes (9).

8. Pallet according to Claim 1, characterized in that the pallet (1) is equipped with drainage openings (8).

## Revendications

1. Palette à insérer par pile dans un récipient de transport de forme parallélépipédique, la palette (1) possédant, sur sa face supérieure, plusieurs dispositifs de logement (2), qui sont disposés dans un plan horizontal de la palette et sont destinés à loger une lampe électrique (3) comportant un disque de centrage (3a), une ampoule en verre (3b) et un culot (3d,e), et chaque dispositif de logement (2) comportant une surface d'appui (4) pour le disque de centrage (3a) de la lampe (3), caractérisée par le fait que
- la palette (1) est en matière plastique,
- la distance entre des parties, qui se correspondent, de deux palettes (1) empilées directement l'une sur l'autre est inférieure à la longueur des lampes (3),
- les surfaces d'appui (3) sont inclinées selon un angle aigu (a) par rapport au plan horizontal de la palette, l'angle d'inclinaison (a) étant choisi de telle sorte que les lampes (3), qui sont suspendues dans une première palette supérieure (1), peuvent s'insérer, par leurs ampoules de verre (3b) dirigées vers le bas, dans l'espace intercalaire des extrémités (3d) des culots dirigées vers le haut, des lampes (3) suspendues dans une seconde palette (1) située juste au-dessous de la première.

2. Palette suivant la revendication 1, caractérisée par le fait que sur le bord latéral extérieur de chaque surface d'appui (4) sont ménagés deux renfoncements (6) qui sont situés à l'opposé l'un de l'autre et permettent de saisir latéralement, et par le dessous les disques de centrage (3a) dans la face supérieure de la palette (1).

3. Palette suivant la revendication 1, caractérisée par le fait que chaque dispositif de logement (2) est équipé d'un élément de support (5), qui soutient latéralement la lampe (3), au niveau de sa douille (3e) de culot.

4. Palette suivant la revendication 1, caractérisée en ce que le contour et les dimensions de la surface d'appui (4) sont adaptés au contour et aux dimensions du disque de centrage (3a).

5. Palette suivant la revendication 1, caractérisée en ce que la palette (1) comporte, sur sa face inférieure, une multipicité d'éléments de serrage (7) de forme tubulaire, formés par moulage, ces éléments de serrage (7) étant dimensionnés et positionnés de telle sorte que ceux d'une première palette supérieure (1) sont disposés dans une pile de palettes au-dessus des surfaces d'appui (4) d'une seconde palette (1) située directement au-dessous de la précédente.

6. Palette suivant la revendication 1, caractérisée par le fait que la palette (1) possède essentiellement une section transversale rectangulaire et comporte, au niveau de ses faces frontales, des renfoncements de préhension (10) ayant des largeurs différentes.

7. Palette suivant la revendication 1, caractérisée par le fait que la palette (1) comporte, sur sa face supérieure, des cadres d'empilage (9) dissymétriques.

8. Palette suivant la revendication 1, caractérisée par le fait que la palette (1) possède des ouvertures d'évacuation (8).
